# FASCICULE DE BREVET EUROPEEN

(11) **EP 0 830 276 B1**
(45) Date de publication et mention de la délivrance du brevet: **24.10.2001**
(21) Numéro de dépôt: 96915073.9
(22) Date de dépôt: 23.04.1996
(51) Int. Cl.: B60T 13/57

(54) **SERVOMOTEUR A VOLUME DE COMPENSATION SIMPLIFIE**
BREMSKRAFTVERSTÄRKER MIT VEREINFACHTEM AUSGLEICHSRAUM
BRAKE SERVO HAVING A SIMPLIFIED COMPENSATION SPACE

(30) Priorité: 08.06.1995 FR 9506743
(43) Date de publication de la demande: 25.03.1998
(73) Titulaire: Bosch Systemes de Freinage, 93700 Drancy (FR)
(72) Inventeur: GAUTIER, Jean, Pierre, F-93600 Aulnay-sous-Bois (FR); VERBO, Ulysse, F-93600 Aulnay-sous-Bois (FR); CARRE, Jean, Jacques, F-93340 Le Raincy (FR)
(74) Mandataire: Bentz, Jean-Paul
(86) Numéro de dépôt international: FR9600614
(87) Numéro de publication internationale: WO9641738

(56) Documents cités:
- EP-A- 0 509 866
- DE-A- 4 227 879

## Description

La présente invention concerne un servomoteur pneumatique de freinage pour véhicule à moteur, utilisant des première et seconde sources de pression d'air délivrant des première et seconde pressions respectives et différentes, ce servomoteur comprenant : une enveloppe rigide; au moins une cloison mobile séparant l'enveloppe rigide de façon étanche en au moins deux chambres dont la première est reliée à la première source; un piston pneumatique lié à la cloison mobile et présentant une paroi au moins partiellement cylindrique coulissant de façon étanche dans l'enveloppe; un plongeur monté coulissant à l'intérieur du piston pneumatique; un clapet à trois voies commandé par le plongeur pour relier sélectivement la seconde chambre à l'une quelconque des deux sources et soumettre sélectivement la cloison mobile à une différence de pression, le clapet comprenant un organe d'obturation tubulaire et deux sièges annulaires incluant un premier siège lié au plongeur et un second siège extérieur au premier siège et lié au piston, l'organe d'obturation présentant une face active axialement mobile sous la commande du plongeur et susceptible de coopérer avec chacun des deux sièges; et un volume de compensation délimité de façon étanche entre une face interne de la paroi du piston et l'organe d'obturation, communiquant en permanence avec la seconde chambre à travers un passage ménagé dans le piston pneumatique, et isolé de la première chambre par application de la face active de l'organe d'obturation sur le second siège.

Un dispositif de ce type est notamment décrit dans le brevet US 5 233 907, bien connu des spécialistes de ce domaine.

Ce dispositif antérieur offre l'avantage de réaliser un équilibrage du clapet grâce à une admission permanente, dans le volume de compensation, de la pression admise ou régnant dans la seconde chambre du servomoteur, ce qui évite au servomoteur de présenter des caractéristiques de fonctionnement qui dépendent de la pression dans la seconde chambre.

Cependant, en dépit de son intérêt largement reconnu, ce dispositif antérieur nécessite, pour sa réalisation, l'usage d'un voile supplémentaire de piston servant à délimiter le volume de compensation, et suppose de ménager des orifices dans la face active du clapet, en regard des deux sièges, ce qui limite la possibilité de rapprocher les deux sièges l'un de l'autre.

L'invention a pour but de proposer un servomoteur aux performances au moins très voisines de celles de ce servomoteur antérieur, mais de structure sensiblement plus simple.

A cette fin, le servomoteur de l'invention est essentiellement caractérisé en ce que la face active du clapet présente, en regard des deux sièges, une surface continue et étanche, et en ce que le passage entre le volume de compensation et la seconde chambre est directement percé dans la paroi cylindrique du piston pneumatique.

De préférence, le passage entre le volume de compensation et la seconde chambre est constitué par un perçage axial d'une portion de plus grande épaisseur de la paroi cylindrique du piston pneumatique.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue schématique en coupe d'un système de freinage à assistance pneumatique utilisant un servomoteur très classique, antérieur au brevet US 5 233 907 précédemment cité; et
- la Figure 2 est une vue en coupe partielle d'un servomoteur conforme à l'invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 susceptible d'entraîner un piston pneumatique 5, au moins partiellement délimité par une paroi cylindrique 51 et mobile par rapport à l'enveloppe 3.

La chambre avant 3a, dont la face avant est fermée de façon étanche par le maître-cylindre 2, est en permanence raccordée à une source de basse pression D à travers une valve anti-retour 6.

La chambre arrière 3b est en revanche susceptible d'être sélectivement raccordée soit à la source de basse pression D, soit à une source de haute pression, par exemple à l'atmosphère A.

A cette fin, l'accès à la chambre arrière 3b est contrôlé par un clapet à trois voies 7 et un plongeur 8 logés dans le piston 5, le plongeur étant relié une pédale de frein 9 par l'intermédiaire d'une tige de commande 10 et contrôlant le clapet 7.

En outre, le servomoteur comprend classiquement un filtre d'épuration 14, destiné à éviter toute pollution, par l'atmosphère A, de l'intérieur 50 du piston pneumatique, du clapet 7, et de la chambre arrière 3b.

Lorsque la tige de commande 10 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort de rappel 11.

L'actionnement du plongeur 8 par un mouvement de la tige de commande 10 (vers la gauche sur les figures) a pour effet, dans un premier temps, de commander le clapet 7 de façon qu'il isole l'une de l'autre les chambres 3a et 3b puis, dans un deuxième temps, de commander ce clapet de façon qu'il ouvre la chambre arrière 3b à la pression atmosphérique A.

La différence de pression entre les deux chambres, alors ressentie par la cloison mobile 4, exerce sur cette dernière une poussée qui tend à la déplacer vers la gauche et à lui permettre d'entraîner le piston 5 qui se déplace à son tour en comprimant le ressort 11.

L'effort de freinage exercé sur le plongeur 8 par la tige de commande 10, ou "force d'entrée", et l'effort d'assistance au freinage, ou "force d'assistance", résultant de la poussée de la cloison mobile 4, se conjuguent sur un disque de réaction 12 pour constituer une force d'actionnement transmise au maître-cylindre par l'intermédiaire d'une tige de poussée 13.

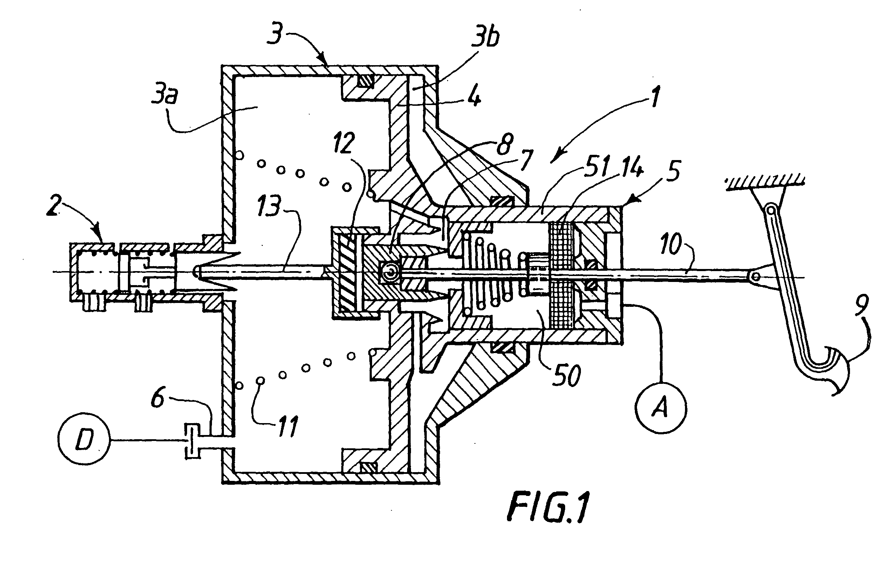

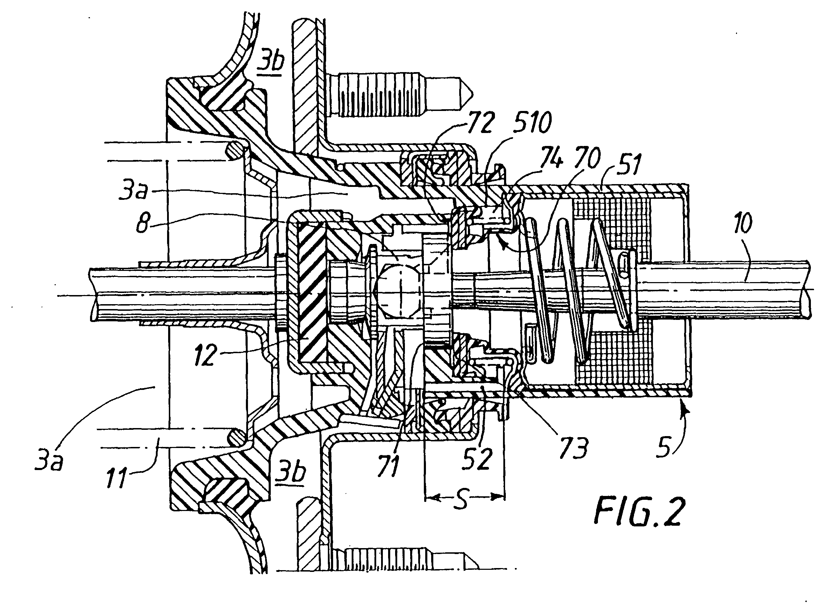

Comme le montre la Figure 2, plus détaillée que la Figure 1, le clapet 7 comprend en fait, de façon connue en soi, un organe d'obturation tubulaire 70 et deux sièges annulaires, à savoir un premier siège 71 lié au plongeur 8, et un second siège 72 extérieur au premier siège et lié au piston 5, l'organe d'obturation 70 présentant une face active 73 axialement mobile sous la commande du plongeur et susceptible de coopérer avec chacun des deux sièges.

En outre, de façon également connue, le servomoteur comprend un volume de compensation 74 délimité de façon étanche entre une face interne 510 de la paroi du piston 5 et l'organe d'obturation 70, communiquant en permanence avec la seconde chambre 3b à travers au moins un passage 52 ménagé dans le piston pneumatique 5, et isolé de la première chambre 3a par application de la face active 73 de l'organe d'obturation sur le second siège 72.

Selon l'invention, la face active 73 du clapet 7 présente, en regard des deux sièges 71 et 72, une surface continue et étanche comme c'est le cas dans les servomoteurs dépourvus de volume de compensation, du type illustré sur la Figure 1, et le passage 52 reliant le volume de compensation 74 à la seconde chambre 3b est directement percé dans la paroi cylindrique 51 du piston pneumatique 5.

Comme le montre la figure 2, ce passage 52 est de préférence constitué par un perçage axial d'une portion S de plus grande épaisseur de la paroi cylindrique 51 du piston pneumatique 5.

## Revendications

1. Servomoteur pneumatique de freinage utilisant des première et seconde sources de pression d'air (D, A) délivrant des première et seconde pressions respectives et différentes, ce servomoteur comprenant :
- une enveloppe rigide (3);
- au moins une cloison mobile (4) séparant l'enveloppe rigide de façon étanche en au moins deux chambres (3a, 3b) dont la première (3a) est reliée à la première source (D);
- un piston pneumatique (5) lié à la cloison mobile et présentant une paroi au moins partiellement cylindrique (51) coulissant de façon étanche dans l'enveloppe;
- un plongeur (8) monté coulissant à l'intérieur du piston pneumatique;
- un clapet (7) à trois voies commandé par le plongeur pour relier sélectivement la seconde chambre (3b) à l'une quelconque des deux sources (D, A) et soumettre sélectivement la cloison mobile (4) à une différence de pression, le clapet comprenant un organe d'obturation tubulaire (70) et deux sièges annulaires incluant un premier siège (71) lié au plongeur (8) et un second siège (72) extérieur au premier siège et lié au piston (5) , l'organe d'obturation (70) présentant une face active (73) axialement mobile sous la commande du plongeur (8) et susceptible de coopérer avec chacun des deux sièges (71, 72); et
- un volume de compensation (74) délimité de façon étanche entre une face interne (510) de la paroi (51) du piston (5) et l'organe d'obturation (70), communiquant en permanence avec la seconde chambre (3b) à travers un passage (52) ménagé dans le piston pneumatique (5), et isolé de la première chambre (3a) par application de la face active (73) de l'organe d'obturation (70) sur le second siège (72),
**caractérisé en ce que** la face active (73) du clapet (7) présente, en regard des deux sièges (71, 72), une surface continue et étanche, et **en ce que** le passage (52) entre le volume de compensation (74) et la seconde chambre (3b) est directement percé dans la paroi cylindrique (51) du piston pneumatique (5).

2. Servomoteur suivant la revendication 1, **caractérisé en ce que** le passage (52) entre le volume de compensation (74) et la seconde chambre (3b) est constitué par un perçage axial d'une portion (S) de plus grande épaisseur de la paroi cylindrique (51) du piston pneumatique (5).

## Patentansprüche

1. Pneumatischer Servomotor zur Bremsunterstützung unter Verwendung einer ersten und einer zweiten Luftdruckquelle (D, A), die einen ersten bzw. einen zweiten, sich unterscheidenden Druck liefern, wobei dieser Servomotor enthält:
- ein starres Gehäuse (3),
- zumindest eine bewegliche Wand (4), die das starre Gehäuse in dichter Weise in zumindest zwei Kammern (3a, 3b) unterteilt, von denen die erste (3a) mit der ersten Druckquelle (D) verbunden ist,
- einen Pneumatikkolben (5), der mit der beweglichen Wand verbunden ist und eine zumindest teilweise zylinderförmige Wand (51) aufweist, die in dichter Weise im Gehäuse gleitet,
- einen Tauchkolben (8), der im Inneren des Pneumatikkolbens gleitend gelagert ist,
- ein Dreiwegeventil (7), das vom Tauchkolben gesteuert wird, um die zweite Kammer (3b) selektiv mit einer der beiden Druckquellen (D, A) zu verbinden und die bewegliche Wand (4) selektiv einer Druckdifferenz auszusetzen, wobei das Ventilelement ein rohrförmiges Schließorgan (70) und zwei ringförmige Sitze aufweist, die einen mit dem Tauchkolben (8) verbundenen ersten Sitz (71) und einen zweiten Sitz (72) enthalten, der sich außerhalb des ersten Sitzes befindet und mit dem Tauchkolben (5) verbunden ist, wobei das Schließorgan (70) eine aktive Seite (73) aufweist, die unter dem Einfluß des Tauchkolbens (8) axial beweglich ist und mit jedem der beiden Sitze (71, 72) zusammenwirken kann, und
- einen Ausgleichsraum (74), der in dichter Weise zwischen der Innenseite (510) der Wand (51) des Kolbens (5) und dem Schließorgan (70) abgegrenzt ist, permanent mit der zweiten Kammer (3b) durch einen Durchgang (52) in Verbindung steht, der im Pneumatikkolben (5) ausgeführt ist, und von der ersten Kammer (3a) durch Andrücken der aktiven Seite (73) des Schließorgans (70) an den zweiten Sitz (72) getrennt ist,
**dadurch gekennzeichnet, daß** die aktive Seite (73) des Ventilelements (7) den beiden Sitzen (71, 72) gegenüberliegend eine durchgehende und dichte Fläche aufweist und daß der Durchgang (52) zwischen dem Ausgleichsraum (74) und der zweiten Kammer (3b) direkt in der zylinderförmigen Wand (51) des Pneumatikkolbens (5) ausgeführt ist.

2. Servomotor nach Anspruch 1, **dadurch gekennzeichnet, daß** der Durchgang (52) zwischen dem Ausgleichsraum (74) und der zweiten Kammer (3b) aus einer axialen Bohrung in einem Bereich (S) mit größerer Dicke der zylinderförmigen Wand (51) des Pneumatikkolbens (5) besteht.

## Claims

1. Pneumatic brake booster using first and second sources (D, A) of air pressure delivering first and second respective and different pressures, this booster comprising:
- a rigid casing (3);
- at least one moving partition (4) dividing the rigid casing into at least two chambers (3a, 3b) in leaktight fashion, the first (3a) of which chambers is connected to the first source (D);
- a pneumatic piston (5) linked to the moving partition and exhibiting an at least partially cylindrical wall (51) sliding in the casing in leaktight fashion;
- a plunger (8) mounted so that it can slide inside the pneumatic piston;
- a three-way valve (7) operated by the plunger in order selectively to connect the second chamber (3b) to either one of the two sources (D, A) and selectively subject the moving partition (4) to a pressure difference, the valve comprising a tubular shut-off member (70) and two annular seats including a first seat (71) linked to the plunger (8) and a second seat (72) outside the first seat and linked to the piston (5), the shut-off member (70) exhibiting an active face (73) which can move axially when acted upon by the plunger (8) and which is capable of interacting with each one of the two seats (71, 72); and
- a compensation volume (74) delimited in leaktight fashion between an internal face (510) of the wall (51) of the piston (5) and the shut-off member (70), permanently communicating with the second chamber (3b) through a passage (52) made in the pneumatic piston (5) and isolated from the first chamber (3a) by the active face (73) of the shut-off member (70) being applied against the second seat (72),
**characterized in that** the active face (73) of the valve (7), facing the two seats (71, 72), exhibits a continuous and leaktight surface and **in that** the passage (52) between the compensation volume (74) and the second chamber (3b) is pierced directly in the cylindrical wall (51) of the pneumatic piston (5).

2. Booster according to Claim 1, **characterized in that** the passage (52) between the compensation volume (74) and the second chamber (3b) consists of an axial piercing of a portion (S) of greater thickness of the cylindrical wall (51) of the pneumatic piston (5).
